# EUROPÄISCHE PATENTANMELDUNG

(11) **EP 2 453 327 A2**
(43) Veröffentlichungstag der Anmeldung: **16.05.2012**
(21) Anmeldenummer: 11184961.8
(22) Anmeldetag: 13.10.2011
(51) Int. Cl.: G05B 19/409

(54) **Maschinenbedienung mit Browser**

(30) Priorität: 11.11.2010 DE 102010051028
(71) Anmelder: Heidelberger Druckmaschinen AG, 69115 Heidelberg (DE)
(72) Erfinder: Buckenmaier, Matthias, 69469 Weinheim (DE); Hammann, Werner, 67434 Neustadt an der Weinstraße (DE); Scheurer, Achim, 76756 Bellheim (DE)

(57) **Zusammenfassung**

Die vorliegende Erfindung betrifft ein Verfahren zur Bedienung von Maschinen (1) mit einem Steuerungsrechner (20) und einer Anzeigevorrichtung (23) mit einer ersten Bedienoberfläche (18) eines ersten Anwendungsprogramms und wenigstens einer zweiten Bedienoberfläche (19) eines zweiten Anwendungsprogramms auf der Anzeigevorrichtung (23). Die Erfindung zeichnet sich dadurch aus, dass die ersten Bedienoberfläche (18) und die zweite Bedienoberfläche (19) auf der Anzeigevorrichtung (23) ein gemeinsames Anzeigefenster bilden.

## Beschreibung

Die vorliegende Erfindung betrifft ein Verfahren zur Bedienung von Maschinen mit einem Steuerungsrechner und einer Anzeigevorrichtung mit einer ersten Bedienoberfläche eines Anwendungsprogramms und wenigstens einer Bedienoberfläche eines zweiten Anwendungsprogramms auf der Anzeigevorrichtung.

Von Standardbetriebssystemen wie Windows ist es bekannt, dass jedes Anwendungsprogramm auf dem Bildschirm in einem eigenen Anzeigefenster angezeigt wird. Möchte man von der Bedienoberfläche des ersten Programms zu der Bedienoberfläche des zweiten Programms schalten, so muss man mit einem entsprechenden Bedienelement wie einer Mouse das Programm des zweiten Fensters in den Vordergrund schalten oder eine Bedienoberfläche schließen.

Es ist weiterhin aus der Patentanmeldung EP 1 208 979 A1 bekannt, eine Druckmaschinensteuerung mit einem Internetbrowser als Bedienoberfläche auszustatten. Dabei werden die gängigen Standardinternetbrowser, welche auch bei Windows zum Einsatz kommen, eingesetzt.

Weiterhin ist aus der Anmeldung 10 2007 056 879 A1 bekannt, Peripheriegeräte für Druckmaschinen mit eigenen Bedienoberflächen in Form von Browsern auszustatten, so dass Bedienoberflächen für neue Peripheriegeräte einfach und flexibel in das Bediensystem einer existierenden Druckmaschine eingebunden werden können.

Dieser bekannte Stand der Technik hat den großen Nachteil, dass weiterhin für jedes eingesetzte Gerät eine Browserapplikation in Form einer Bedienoberfläche gestartet werden muss, so dass bei mehreren gleichzeitig zu bedienenden Geräten von einem Anzeigefenster zum nächsten gewechselt werden muss. Dieses Hin- und Herschalten zwischen den Bedienoberflächenanzeigefenstern, so wie es von Windows her bekannt ist, ist für den Benutzer unkomfortabel und kann zu Fehlbedienungen führen, wenn der Benutzer das falsche Fenster auswählt.

Es ist daher Aufgabe der vorliegenden Erfindung, ein Verfahren zur Bedienung von Maschinen zu schaffen, welches ein komfortables und sicheres Bedienen mehrerer Geräte mit mehreren Bedienoberflächen erlaubt.

Die Aufgabe wird erfindungsgemäß durch Patentanspruch 1 gelöst, vorteilhafte Ausgestaltungen der Erfindung sind den Unteransprüchen und den Zeichnungen zu entnehmen. Das erfindungsgemäße Verfahren eignet sich insbesondere zur Bedienung von Maschinen, bei denen eine sichere Bedienung ohne Programmabstürze möglich sein muss. Dieses ist insbesondere bei Maschinen der Fall, welche gefährliche Maschinenzustände aufweisen können, so wie z. B. Druckmaschinen. Dabei ist vorgesehen, dass auf einem Steuerungsrechner der Maschine wenigstens zwei Anwendungsprogramme ablaufen, welche jeweils eine eigene Bedienoberfläche aufweisen. Beide Anwendungsprogramme werden auf einer Anzeigevorrichtung wie einem Bildschirm angezeigt, wobei erfindungsgemäß vorgesehen ist, dass die erste Bedienoberfläche und die zweite Bedienoberfläche auf dem Bildschirm ein gemeinsames Anzeigefenster bilden. Dies hat den großen Vorteil, dass der Bediener bei der Benutzung zweier Bedienoberflächen nicht zwischen zwei Fenstern wie bei Windows hin- und herschalten muss, sondern immer nur auf das eine Anzeigefenster achten muss. Das in den technische in den Hintergrund oder Vordergrund Schalten zur tatsächlichen Ausführung der Bedienbefehle geschieht dabei unbemerkt vom Benutzer im Hintergrund, so dass der Benutzer immer nur ein Anzeigefenster mit Anteilen beider Bedienoberfläche angezeigt bekommt. Des Weiteren besteht hier der große Vorteil, dass ein Absturz einer Bedienoberfläche nicht zum Absturz der anderen Bedienoberfläche führt, da es sich um zwei separate Programme handelt, die parallel ablaufen. Während bisher z. B. die zweite Bedienoberfläche als Browser ein direkter Bestandteil der Maschinenbedienungsoberfläche war und damit ein Absturz des Browsers zwangsläufig die Maschinenbedienoberfläche und damit die ganze Druckmaschine zum Absturz gebracht hat, sind nun Maschinenbedienung und Browser zwei getrennte Anwendungen, so dass beide Bedienoberflächen sich nicht beeinflussen.

Erfindungsgemäß ist insbesondere vorgesehen, dass die zweite Bedienoberfläche eine Browseranwendung insbesondere auf HTML-Basis oder ein Java-Applet ist. HTML-Browser oder Java-Applet sind besonders geeignet, da für diese Programme für viele Programme insbesondere Peripheriegeräte einfach zu programmieren sind. Des Weiteren hat sich der HTML-Standard bei Browsern und das Java-Applet bei kleinen Anwendungsprogrammen als Standard etabliert. Für den Bediener spielt es jedoch keine Rolle, auf welcher Technik die zweite Bedienoberfläche basiert, denn die Integration in das gemeinsame Anzeigefenster mit der ersten Bedienoberfläche wird immer so vorgenommen, dass der Bediener gar nicht wahrnehmen kann, dass er eigentlich zwei Bedienoberflächen vor sich hat. Auf diese Art und Weise lässt sich die Bedienung der Druckmaschine über eine erste Bedienoberfläche parallel mit einer Browserbedienoberfläche als zweiter Bedienoberfläche zur Bedienung von Peripheriegeräten als ein gemeinsames Anzeigefenster realisieren, so dass der Bediener den Eindruck hat, eine gemeinsame Bedienoberfläche für die Druckmaschine und die Peripheriegeräte vor sich zu haben.

Es ist des Weiteren vorgesehen, dass die erste Bedienoberfläche und die zweite Bedienoberfläche in dem gemeinsamen Anzeigefenster durch ein übergeordnetes Programm gesteuert werden. Dieses übergeordnete Programm besitzt die Fähigkeit, die erste Bedienoberfläche und die zweite Bedienoberfläche unabhängig voneinander zu starten und zu schließen, was dazu führt, dass der Absturz einer Bedienoberfläche nicht die andere Bedienoberfläche berührt. Der Bediener muss sich auch nicht um das Starten oder Stoppen der Bedienoberflächen kümmern, denn er bekommt nur ein einziges gemeinsames Anzeigefenster angezeigt, so dass er die Bedienoberflächen gar nicht als einzelne Anwendungen wahrnehmen kann. Da auf die Fenstertechnologie wie bei Windows verzichtet wird, fällt auch die Fehlerquelle weg, dass der Nutzer durch ein unbeabsichtigtes Schließens eines Fensters eine Anwendung schließt, welche er eigentlich noch benötigt. Das Beenden und Starten von Anwendungen obliegt bei der vorliegenden Erfindung nicht dem Nutzer, sondern dem übergeordneten Programm, das die erste Bedienoberfläche und die zweite Bedienoberfläche überwacht und steuert.

In einer weiteren Ausgestaltung der Erfindung ist vorgesehen, dass die erste Bedienoberfläche technisch im Hintergrund und die zweite Bedienoberfläche technisch im Vordergrund auf der Anzeigevorrichtung ablaufen. Unter Hintergrund bzw. Vordergrund ist hier zu verstehen, dass die aktive Bedienoberfläche im Vordergrund abläuft und die nicht genutzte Bedienoberfläche im Hintergrund. Auf der Anzeigevorrichtung kann der Bediener jedoch optisch keinen Unterschied wahrnehmen, denn an der Anzeige ändert sich insoweit nichts, denn es gibt keine Fenster, die in den Vorder- oder Hintergrund geschaltet werden müssen. Unter Hintergrund bzw. Vordergrund ist hiermit also der technische Ablauf zu verstehen, wobei das aktive Programm im Vordergrund abläuft, während das passive Programm im Hintergrund abläuft. In technischer Hinsicht ist dabei vorgesehen, dass die Maschinenbedienung im Hintergrund läuft, während die zweite Bedienoberfläche in Form einer Browserapplikation im Vordergrund auf dem Bildschirm läuft. Trotz des Browsers im Vordergrund muss sich jedoch die Maschine bedienen lassen, ohne dass dadurch der Browser wiederum in den Hintergrund verschwindet. Dabei kann es vorkommen, dass die im Hintergrund liegende Maschinenbedienung ein sogenanntes Popup-Fenster aufschaltet, was jedoch nachwievor zu der im Hintergrund ablaufenden ersten Bedienoberfläche der Maschinenbedienung gehört. Dieses Popup-Fenster kann kleiner als die Browserfläche der zweiten Bedienoberfläche sein und soll nun im Vordergrund, also über dem Browser, angezeigt werden. Um dies zu verwirklichen, muss die Bedienoberfläche in den Vordergrund geschaltet werden, worauf dann das Popup-Fenster zu liegen kommt.

Dabei ist erfindungsgemäß vorgesehen, dass bei der Schaltung der ersten Bedienoberfläche in den Vordergrund an der Position der zweiten Bedienoberfläche auf der Anzeigevorrichtung ein Standbild eingeblendet wird, welches einen Screenshot der zweiten Bedienoberfläche enthält, und an der Stelle der zweiten Bedienoberfläche eingeblendet wird. Andernfalls würde an der Stelle, an der vorher der Browser der zweiten Bedienoberfläche eingeblendet war, ein schwarzes Loch zu sehen sein. Damit der Drucker von all diesen Vorgängen nichts mitbekommt, wird vor der Aufschaltung des Popup-Fensters vom Browser der zweiten Bedienoberfläche ein Screenshot erzeugt und an die gleiche Stelle der ersten Bedienoberfläche für die Maschinenbedienung eingeblendet. Über diesem Screenshot der zweiten Bedienoberfläche kommt nun das Popup-Fenster der ersten Bedienoberfläche zu liegen. Der Browser der zweiten Bedienoberfläche liegt dann unsichtbar im Hintergrund.

Es ist weiterhin erfindungsgemäß vorgesehen, dass das Popup-Fenster der ersten Bedienoberfläche über dem eingeblendeten Screenshot zu liegen kommt und dass beim Schließen des Popup-Fensters der ersten Bedienoberfläche die zweite Bedienoberfläche wieder in den Vordergrund an der Stelle des Screenshots eingeblendet wird. Nach dem Schließen des Popup-Fensters der ersten Bedienoberfläche wird der Browser der zweiten Bedienoberfläche wieder in den Vordergrund geschaltet und erscheint exakt an der Stelle des Screenshots, so dass der Bediener nicht bemerkt, dass nun anstelle des Screenshots wieder die zweite Bedienoberfläche des Browsers zu sehen ist.

Die vorliegende Erfindung wird nachfolgend anhand zweier Figuren näher beschrieben und erläutert. Es zeigen:
- Figur 1: einen Überblick über eine Bogendruckmaschine mit ihren Steuerungskomponenten und
- Figur 2: eine erfindungsgemäße Anzeigevorrichtung mit einem Anzeigefenster mit wenigstens zwei in einem Fenster angezeigten Bedienoberflächen.

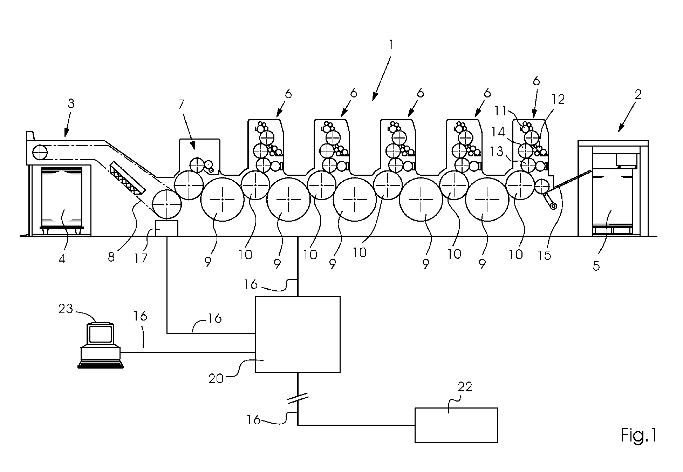

Die Figur 1 zeigt eine Bogendruckmaschine 1 mit fünf Druckwerken 6 und einem nachgeschalteten Lackwerk 7. Die bogenförmigen Bedruckstoffe werden im Anleger 2 einem Anlegerstapel 5 entnommen und über einen Saugbändertisch 15 an das erste Druckwerk 6 übergeben. Die Druckwerke 6 sind weitgehend identisch aufgebaut und verfügen über einen Druckzylinder 10, Gummituchzylinder 13 und Plattenzylinder 14 sowie jeweils ein Farbwerk 11 und ein Feuchtwerk 12. Zwischen den Druckwerken 6 werden die Bogen mittels Transportzylinder 9 durch die Druckwerke 6 und das Lackwerk 7 transportiert. Ausgangs des Lackwerks 7 ist ein Farbmessgerät 17 vorgesehen, welches die Druckqualität der Bedruckstoffe erfasst und über eine Kommunikationsverbindung 16 an einen Steuerungsrechner 20 der Druckmaschine 1 weiterleitet. Die fertigen Bedruckstoffe werden mittels einer Auslegerkette 8 im Ausleger 3 auf einem Auslegerstapel 4 abgelegt.

Der Steuerungsrechner 20 steuert sowohl den Hauptantrieb der Druckmaschine 1 als auch die diversen Stellmotoren in den Druckwerken 6 und die dazu gehörigen Peripheriegeräte wie Druckluftversorgung oder Pudergeräte im Ausleger 3. Bedient wird der Steuerungsrechner 20 über einen Bildschirm 23 mit einem zugeordneten Rechner, welcher mit dem Steuerungsrechner 20 wiederum über einen Kommunikationsverbindung 16 verbunden ist. Zudem ist an den Steuerungsrechner 20 noch ein weiteres Farbmessgerät in Form eines Tischfarbmessgeräts 22 angebunden, mit dem Bedruckstoffe, welche dem Auslegerstapel 4 entnommen worden sind, auf ihre Druckqualität hin überprüft werden können. Dabei ist vorgesehen, dass für die Bedienung der Druckmaschine 1 und der Peripheriegeräte unterschiedliche Bedienoberflächen vorgesehen sind. Beispielhaft sind hier zwei Bedienoberflächen 18, 19 aufgeführt, es können aber auch mehr sein.

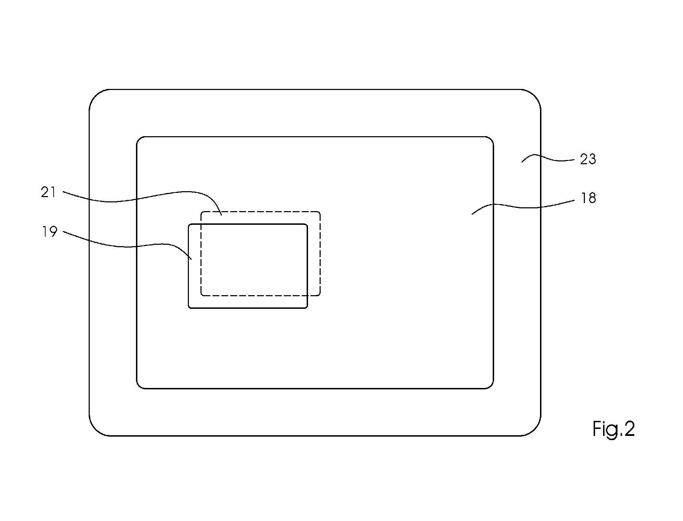

Gemäß Figur 2 werden die erste Bedienoberfläche 18 und die zweite Bedienoberfläche 19 auf dem als Touchscreen ausgeführten Bildschirm 23 in einem gemeinsamen Fenster angezeigt, so dass der Benutzer nicht zwischen verschiedenen Anzeigefenstern für verschiedene Bedienoberflächen wie z. B. unter Windows umschalten muss. In der Figur 2 ist die erste Bedienoberfläche 18 als gerade inaktiv in den Hintergrund geschaltete Bedienoberfläche dargestellt, während die zweite Bedienoberfläche 19 als aktiv in den Vordergrund geschaltete Bedienoberfläche angezeigt wird. Möchte der Bediener nun auf die erste Bedienoberfläche 18 zugreifen, so kann er den entsprechenden Bereich um die zweite Bedienoberfläche 19 berühren oder mit einer Mouse anklicken, wodurch sich optisch zunächst nichts verändert. Dabei kommt es häufig vor, dass die erste Bedienoberfläche 19 ein sogenanntes Popup-Fenster generiert, welches dann über der zweiten Bedienoberfläche 19 eingeblendet wird. Da das Popup-Fenster jedoch flächenmäßig kleiner ist als die zweite Bedienoberfläche 19 würde sich beim Schalten der ersten Bedienoberfläche 18 in den Vordergrund ein schwarzes Loch auftun, welches bei der vorliegenden Erfindung jedoch durch ein Hintergrundbild 21 der zweiten Bedienoberfläche 19 vermieden wird. Das Hintergrundbild 21 ist ein Screenshot der zweiten Bedienoberfläche 19, so dass der Bediener von dem in den Hintergrund Schalten der zweiten Bedienoberfläche 19 nichts mitbekommt.

Diese Art der Bedienung hat den großen Vorteil, dass zwei Bedienoberflächen 18, 19 in einem gemeinsamen Anzeigefenster auf dem Bildschirm 23 angezeigt werden, so dass der Bediener gar nicht wahrnimmt, dass es sich um zwei unterschiedliche Bedienoberflächen 18, 19 handelt und nicht um eine gemeinsame Bedienoberfläche. Falls eine der Bedienoberflächen 18, 19 abstürzt, so kann diese unabhängig von der anderen durch den Steuerungsrechner 20 wieder gestartet werden, so dass eben nicht die erste Bedienoberfläche 18, welche vorzugsweise die Maschinenbedienoberfläche ist, ebenfalls abstürzt, wenn die zweite Bedienoberfläche 19, welche eine Bedienoberfläche zur Bedienung von Peripheriegeräten ist, abstürzt. Auch hier wird solange ein Screenshot 21 eingeblendet, bis die abgestürzte Bedienoberfläche wieder lauffähig ist, so dass der Bediener vom Absturz möglichst wenig mitbekommt. Neben der komfortableren Bedienung hat die vorliegende Erfindung also auch noch den Vorteil, dass eine zuverlässigere und sicherere Bedienung der Druckmaschine 1 möglich ist. Die zweite Bedienoberfläche 19 ist dabei vorzugsweise als HTML-Browser oder Java-Applet ausgeführt.

### Bezugszeichenliste

- 1: Druckmaschine
- 2: Anleger
- 3: Ausleger
- 4: Auslegerstapel
- 5: Anlegerstapel
- 6: Druckwerk
- 7: Lackwerk
- 8: Auslegerkette
- 9: Transportzylinder
- 10: Druckzylinder
- 11: Farbwerk
- 12: Feuchtwerk
- 13: Gummituchzylinder
- 14: Plattenzylinder
- 15: Saugbändertisch
- 16: Kommunikationsverbindung
- 17: Farbmessgerät
- 18: erste Bedienoberfläche
- 19: zweite Bedienoberfläche
- 20: Steuerungsrechner
- 21: Hintergrundbild
- 22: Tischfarbmessgerät
- 23: Bildschirm

## Patentansprüche

1. Verfahren zur Bedienung von Maschinen (1) mit einem Steuerungsrechner (20) und einer Anzeigevorrichtung (23) mit einer ersten Bedienoberfläche (18) eines ersten Anwendungsprogramms und wenigstens einer zweiten Bedienoberfläche (19) eines zweiten Anwendungsprogramms auf der Anzeigevorrichtung (23),
**dadurch gekennzeichnet,**
**dass** die ersten Bedienoberfläche (18) und die zweite Bedienoberfläche (19) auf der Anzeigevorrichtung (23) ein gemeinsames Anzeigefenster bilden.

2. Verfahren nach Anspruch 1,
**dadurch gekennzeichnet,**
**dass** die zweite Bedienoberfläche (19) eine Browseranwendung, insbesondere auf HTML Basis, oder ein Java-Applet ist.

3. Verfahren nach einem der vorhergehenden Ansprüche,
**dadurch gekennzeichnet,**
**dass** die zweite Bedienoberfläche (19) zur Bedienung von Peripheriegeräten (2,317) der Maschine (1) ausgelegt ist.

4. Verfahren nach einem der vorhergehenden Ansprüche,
**dadurch gekennzeichnet,**
**dass** die erste Bedienoberfläche (18) und die zweite Bedienoberfläche (19) in dem gemeinsamen Anzeigefenster durch ein übergeordnetes Programm gesteuert werden.

5. Verfahren nach einem der vorhergehenden Ansprüche,
**dadurch gekennzeichnet,**
**dass** die erste Bedienoberfläche (18) die Oberfläche zur Bedienung der Maschine (1) ist.

6. Verfahren nach einem der vorhergehenden Ansprüche,
**dadurch gekennzeichnet,**
**dass** die erste Bedienoberfläche (18) im Hintergrund und die zweite Bedienoberfläche (19) im Vordergrund auf der Anzeigevorrichtung (23) abläuft.

7. Verfahren nach Anspruch 6,
**dadurch gekennzeichnet,**
**dass** sich die erste Bedienoberfläche (18) und die zweite Bedienoberfläche (19) ohne optische Veränderung der Anzeige bedienen lassen.

8. Verfahren nach Anspruch 6 oder 7,
**dadurch gekennzeichnet,**
**dass** die erste Bedienoberfläche (18) wenigstens ein Popup-Fenster generiert, welches kleiner ist als die zweite Bedienoberfläche (19).

9. Verfahren nach Anspruch 8,
**dadurch gekennzeichnet,**
**dass** bei der Schaltung der ersten Bedienoberfläche (18) in den Vordergrund an der Position der zweiten Bedienoberfläche (19) auf der Anzeigevorrichtung (23) ein Standbild eingeblendet wird, welches einen Screenshot der zweiten Bedienoberfläche (19) enthält und an der Stelle der zweiten Bedienoberfläche (19) eingeblendet wird.

10. Verfahren nach Anspruch 9,
**dadurch gekennzeichnet,**
**dass** das Popup-Fenster der ersten Bedienoberfläche (18) über dem eingeblendeten Screenshot zu liegen kommt und dass beim Schließen des Popup-Fensters der ersten Bedienoberfläche (18) die zweite Bedienoberfläche (19) wieder in den Vordergrund an der Stelle des Screenshots eingeblendet wird.
